# EUROPÄISCHE PATENTSCHRIFT

(11) **EP 3 874 240 B1**
(45) Veröffentlichungstag und Bekanntmachung des Hinweises auf die Patenterteilung: **02.11.2022**
(21) Anmeldenummer: 19770078.4
(22) Anmeldetag: 18.09.2019
(51) Int. Cl.: G01F 1/84, G01F 15/02

(54) **VERFAHREN ZUR KORREKTUR MINDESTENS EINES MESSWERTS EINES CORIOLIS-MESSGERÄTS UND EIN SOLCHES CORIOLIS-MESSGERÄT**
METHOD FOR CORRECTING AT LEAST ONE MEASURED VALUE OF A CORIOLIS MEASURING DEVICE AND SUCH A CORIOLIS MEASURING DEVICE
PROCÉDÉ DE CORRECTION D'AU MOINS UNE VALEUR DE MESURE D'UN APPAREIL DE MESURE À EFFET CORIOLIS ET UN APPAREIL DE MESURE À EFFET CORIOLIS DE CE GENRE

(30) Priorität: 29.10.2018 DE 102018126905
(43) Veröffentlichungstag der Anmeldung: 08.09.2021
(73) Patentinhaber: Endress + Hauser Flowtec AG, 4153 Reinach (CH)
(72) Erfinder: ZHU, Hao, 85354 Freising (DE)
(74) Vertreter: Waselikowski, Stefan
(86) Internationale Anmeldenummer: PCT/EP2019/075069
(87) Internationale Veröffentlichungsnummer: WO 2020/088837

(56) Entgegenhaltungen:
- EP-A1- 2 485 020
- WO-A1-00/19175
- DE-A1-102016 007 905
- DE-A1-102016 112 002

## Beschreibung

Die Erfindung betrifft ein Verfahren zur Korrektur mindestens eines Messwerts einer Messgröße betreffend ein durch mindestens zwei Messrohre strömendes Medium, wobei Messwerte mit einem Coriolis-Messgerät erfasst werden und ein solches Coriolis-Messgerät.

Coriolis-Messgeräte mit Messwertkorrektur sind bereits bekannt, wie gezeigt in der USRE40095E. Das gezeigte Coriolis-Messgeräte weist zwei Messrohre auf, welche in Schwingung versetzt werden. Schwingungssensoren erfassen die Messrohrschwingungen, so dass aus mittels der mit den Schwingungssensoren erfassten Messsignale Messwerte von Messgrößen berechnet werden können. Für den Fall, dass die Messsignale nicht von ausreichender Qualität sind, schlägt die USRE40095E vor, Historiendaten zu verwenden, um aktuelle Messsignale mangelhafter Qualität durch die Historiendaten zu ersetzen.

Dies ist jedoch eine nachteilhafte Lösung, da Historiendaten allenfalls kurzfristig zum Ersatz von aktuellen Daten herangezogen werden können.

DE 10 2016 007 905 A1 offenbart ein weiteres Beispiel eines Verfahrens oder einer Vorrichtung gemäß dem Stand der Technik. Dieses Dokument betrifft einen Messaufnehmer mit mindestens zwei Oszillatoren die jeweils durch ein Paar von Messrohren gebildet sind.

Aufgabe der Erfindung ist es daher, ein verbessertes Verfahren zur Korrektur eines Messwerts und ein Coriolis-Messgerät zur Umsetzung des Verfahrens vorzuschlagen.

Die Aufgabe wird gelöst durch ein Verfahren gemäß dem unabhängigen Anspruch 1 sowie durch ein Coriolis-Messgerät gemäß dem unabhängigen Anspruch 11.

Bei einem erfindungsgemäßen Verfahren zur Korrektur mindestens eines Messwerts einer Messgröße betreffend ein durch mindestens zwei Messrohre strömendes Medium, werden Messwerte mit einem Coriolis-Messgerät erfasst,
wobei das Coriolis-Messgerät eine erste Gruppe von Messrohren und eine zweite Gruppe von Messrohren mit jeweils mindestens einem Messrohr zum Führen des Mediums sowie mindestens einen Schwingungserreger sowie mindestens zwei Schwingungssensoren aufweist,
wobei jedes Messrohr mittels mindestens eines Schwingungserregers zum Schwingen angeregt wird, und wobei die Schwingungen jedes Messrohrs mittels mindestens zweier Schwingungssensoren erfasst werden,
wobei die Messrohre unterschiedlicher Gruppen voneinander entkoppelt sind,
wobei eine elektronische Mess-/Betriebsschaltung des Coriolis-Messgeräts jeweils mindestens eine der folgenden Messgrößen oder jeweils einer davon abgeleiteten Messgröße bei mindestens einen ersten Messrohr sowie mindestens einem zweiten Messrohr überwacht:
   Phasendifferenz zwischen Messsignalen von mindestens zwei Schwingungssensoren, Resonanzfrequenz,
   Schwingungserregerstromamplitude,
   Messrohrschwingungsamplitude,
   wobei in einem ersten Verfahrensschritt für das mindestens eine Messrohr der ersten Gruppe und für das mindestens eine Messrohr der zweiten Gruppe auf Basis mindestens einer der überwachten Messgrößen jeweils eine Glaubwürdigkeit ermittelt wird,
      wobei
   bei Verfehlen einer Glaubwürdigkeitsanforderung bei zumindest einer der über die erste Gruppe oder zweite Gruppe von Messrohren überwachten Messgrößen (MG), in einem zweiten Verfahrensschritt (102), Messwerten der Messgrößen der ersten Gruppe oder zweiten Gruppe in Abhängigkeit von entsprechenden Messwerten der mittels der mindestens einen zweiten bzw. ersten Gruppe erfassten Messgrößen ermittelt werden.

Die Entkopplung der ersten Gruppe und der zweiten Gruppe voneinander kann durch einen Unterschied von Eigenfrequenzen der Messrohre verschiedener Gruppe n sichergestellt werden. Beispielsweise ist der Unterschied größer als 5Hz, und bevorzugt größer als 10 Hz und insbesondere größer als 15 Hz.

Die Entkopplung kann beispielsweise durch geometrische Unterschiede zwischen den Messrohren verschiedener Gruppen gewährleistet werden.

Eine abgeleitete Messgröße einer Phasendifferenz ist beispielsweise ein Massedurchfluss des Mediums.

Eine abgeleitete Messgröße einer Resonanzfrequenz ist beispielsweise eine Mediendichte.

Eine abgeleitete Messgröße eines Verhältnisses einer Schwingungserregerstromamplitude zu einer Messrohrschwingungsamplitude ist beispielsweise eine Dämpfung.

Eine abgeleitete Messgröße einer Schwingungserregerstromamplitude ist beispielsweise eine Viskosität des Mediums.

Eine abgeleitete Messgröße mindestens einer der aufgeführten Messgrößen ist eine Reynoldszahl des Mediums.

In einer Ausgestaltung bedarf ein Einhalten einer Glaubwürdigkeitsanforderung ein Erfüllen zumindest eines der folgenden Kriterien:
Messwerte der mindestens einen Messgröße liegen in einem Soll-Messwertbereich;
eine erste und/oder zweite zeitliche Ableitung eines Messwertverlaufs der mindestens einen Messgröße liegt jeweils innerhalb eines Sollbereichs;
In einer Ausgestaltung wird bei Nichteinhalten der Glaubwürdigkeitsanforderung durch die erste Gruppe und durch die zweite Gruppe
ein erster Glaubwürdigkeitswert für die erste Gruppe sowie ein zweiter Glaubwürdigkeitswert für die zweite Gruppe ermittelt,
wobei Messwerte der Messgrößen erfasst mittels einer weniger glaubwürdigen Gruppe mittels der entsprechenden Messwerte der Messgrößen erfasst mittels der glaubwürdigeren Gruppe korrigiert werden,
wobei bei Ermitteln eines Glaubwürdigkeitswerts zumindest eines der folgenden Kriterien berücksichtigt wird:
   Abweichung von Messwerten vom Soll-Messwertbereich;
   Abweichung der ersten und/oder zweiten zeitlichen Ableitung eines Messwertverlaufs der mindestens einen Messgröße vom Sollbereich.

So kann beispielsweise eine relative oder absolute Abweichung von einer Mitte oder einer Grenze des Soll-Messwertbereichs bzw. Sollbereichs als Maß für eine Glaubwürdigkeit herangezogen werden. Eine relative Abweichung kann in Bezug auf eine Breite des Sollbereichs bzw. Soll-Messwertbereichs bezogen sein, oder auf einen Absolutwert der Mitte oder einer Grenze.

Ein Fachmann kann einen Sollbereich bzw. Soll-Messwertbereich gemäß seinen Bedürfnissen, seiner Erfahrung oder seiner Erwartungen wählen.

In einer Ausgestaltung werden bei Nichteinhalten der Glaubwürdigkeitsanforderung durch die erste Gruppe und durch die zweite Gruppe aktuelle Messwerte durch historische Messwerte vor Nichteinhaltung der Glaubwürdigkeitsanforderung ersetzt.

In einer Ausgestaltung ist der Soll-Messwertbereich und/oder der Sollbereich vorgeben, und insbesondere messstellenspezifisch vorgegeben,
oder wobei der Soll-Messwertbereich und/oder der Sollbereich auf Basis entsprechender vorhergehender Messwerte und/oder Messwertverlauf festgelegt wird.

In einer Ausgestaltung wird ein vorhergehender Zeitbereich von mindestens 5 Minuten, und insbesondere mindestens 15 Minuten und bevorzugt mindestens 30 Minuten berücksichtigt, und/oder wobei ein vorhergehender Zeitbereich von höchstens 240 Minuten, und insbesondere höchstens 180 Minuten und bevorzugt höchstens 120 Minuten wird berücksichtigt.

In einer Ausgestaltung ist eine abgeleitete Messgröße eine Messgröße aus folgender Liste:
Schwingungsdämpfung, Massedurchfluss, Dichte, Viskosität, Reynoldszahl, ...

In einer Ausgestaltung weisen das mindestens eine Messrohr der ersten Gruppe relativ zum mindestens einen Messrohr der zweiten Gruppe unterschiedliche Schwingungseigenschaften auf,
wobei das mindestens eine Messrohr der ersten Gruppe sowie das mindestens eine Messrohr der zweiten Gruppe mit unterschiedlichen Schwingungsfrequenzen angeregt werden.

In einer Ausgestaltung wird die Messwertkorrektur des zweiten/ersten Messrohrs mit einem Korrekturfaktor beaufschlagt, wobei der Korrekturfaktor mindestens eine der folgenden Eigenschaften des mindestens einen ersten Messrohrs sowie des mindestens einen zweiten Messrohrs berücksichtigt:
Strömungswiderstand, Temperatur, Länge, Durchmesser.

In einer Ausgestaltung werden zwei Messrohre der ersten Gruppe sowie zwei Messrohre der zweiten Gruppe jeweils mittels mindestens eines Schwingungserregers paarweise in gegenläufige Schwingungen versetzt,
und wobei die Messrohrschwingungen der zwei Messrohre der ersten Gruppe sowie der zwei Messrohre der zweiten Gruppe jeweils mittels mindestens zweier Schwingungssensoren paarweise ausgelesen werden.

Ein Coriolis-Messgerät, eingerichtet zur Umsetzung des erfindungsgemäßen Verfahrens umfasst:
eine erste Gruppe von Messrohren mit mindestens einem Messrohr und eine zweite Gruppe von Messrohren mit mindestens einem Messrohr zum Führen eines Mediums, wobei jedes Messrohr einen Einlauf und einen Auslauf aufweist;
mindestens einen Schwingungserreger, welcher dazu eingerichtet ist, die Messrohre zu Schwingungen anzuregen;
mindestens zwei Schwingungssensoren, welche dazu eingerichtet sind, die Schwingungen des Messrohrs zu erfassen;
eine elektronische Mess-/Betriebsschaltung, welche dazu eingerichtet ist, den Schwingungserreger sowie die Schwingungssensoren zu betreiben und Massedurchfluss- bzw.

Durchflussgeschwindigkeits- bzw. Dichtemesswerte zu bestimmen und auszugeben sowie das Verfahren auszuführen;
einen Trägerkörper, welcher dazu eingerichtet ist, die Messrohre zu tragen,
wobei das Coriolis-Messgerät insbesondere ein Elektronikgehäuse zum Behausen der elektronischen Mess-/Betriebsschaltung aufweist.

In einer Ausgestaltung ist an mindestens einem Messrohr der ersten Gruppe sowie an mindestens einem Messrohr der zweiten Gruppe jeweils mindestens ein Temperaturfühler angeordnet, welcher dazu eingerichtet ist, eine Temperatur des entsprechenden Messrohrs zu erfassen,
wobei die elektronische Mess-Betriebsschaltung dazu eingerichtet ist, den Temperaturfühler zu betreiben.

In einer Ausgestaltung weist das Messgerät am Einlauf sowie am Auslauf des mindestens einen Messrohrs jeweils eine Befestigungsvorrichtung auf, welche dazu eingerichtet ist, die Position jeweils eines äußeren Schwingungsknotens zu definieren,
wobei die Befestigungsvorrichtung beispielsweise mindestens eine Platte aufweist, welche Platte mindestens ein Messrohr zumindest teilweise umfasst.

Im Folgenden wird die Erfindung anhand von Ausführungsbeispielen beschrieben.
Fig. 1 skizziert den Aufbau eines typischen Coriolis-Messgeräts;
Fig. 2 skizziert beispielhafte Messwertverläufe zweier verschiedener Messgrößen;
Fig. 3 skizziert den Ablauf eines erfindungsgemäßen Verfahrens.

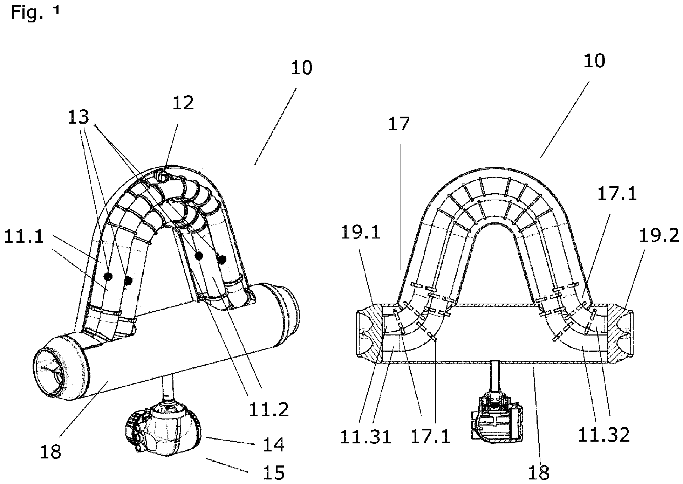

Fig. 1 skizziert den Aufbau eines Coriolis-Messgeräts 10, wobei das Coriolis-Messgerät vier Messrohre 11 mit jeweils einem Einlauf 11.31 und einem Auslauf 11.32 aufweist, wobei zwei Messrohre zu einer ersten Gruppe 11.1 von Messrohren und zwei Messrohre zu einer zweiten Gruppe 11.2 von Messrohren gehören. Das Coriolis-Messgerät weist für jede Gruppe von Messrohren jeweils einen Schwingungserreger 12, und jeweils zwei Schwingungssensoren 13 auf, welche dazu eingerichtet sind, die Messrohre der zugehörigen Gruppe zum Schwingen anzuregen bzw. deren Schwingungen zu erfassen. Die Schwingungserreger sind hier nur schematisch dargestellt, ein Fachmann kann sich gängiger Schwingungssensoren bedienen. Das Coriolis-Messgerät weist des Weiteren zwei Sammler 19 und zwei Prozessanschlüsse 18 auf. Die Schwingungserreger sind dazu eingerichtet, jeweils zwei Messrohre einer ersten Gruppe von Messrohren 11.1 bzw. zwei Messrohre einer zweiten Gruppe von Messrohren 11.2 gegeneinander senkrecht zu einer jeweils durch die bogenförmig ausgestalteten Messrohre definierten

Messrohrlängsebene zum Schwingen anzuregen. Die Schwingungssensoren sind dazu eingerichtet, die den Messrohren einer jeweiligen Gruppe von Messrohren aufgeprägte Schwingungen zu erfassen. Ein erster Sammler 19.1 auf einer stromaufwärtsgerichteten Seite des Messaufnehmers ist dazu eingerichtet, ein aus einer Rohrleitung in den Messaufnehmer einströmendes Medium aufzunehmen und zu den Einläufen der beiden Messrohre zu führen, ein zweiter Sammler 19.2 ist dazu eingerichtet, das aus den Ausläufen der beiden Messrohre austretende Medium aufzunehmen und in die Rohrleitung zu führen. Die Anzahl der Messrohre ist hier rein beispielhaft, so können beispielsweise die erste Gruppe und die zweite Gruppe nur jeweils ein Messrohr aufweisen, also insgesamt zwei Messrohre eingerichtet sein. Eine Befestigungsvorrichtung 17 umfassend jeweils zumindest eine Platte 17.1 definiert jeweils einen Schwingungsknoten am Messrohreinlauf bzw. Messrohrauslauf.

Das Coriolis-Messgerät weist ein Elektronikgehäuse 15, welches dazu eingerichtet ist, eine elektronische Mess-/Betriebsschaltung 14 zu behausen, welche Mess-/Betriebsschaltung dazu eingerichtet ist, die Schwingungserreger sowie die Schwingungssensoren zu betreiben und auf Basis von mittels der Schwingungssensoren gemessenen Schwingungseigenschaften der Messrohre der Gruppen von Messrohren Durchflussmesswerte und/oder Dichtemesswerte zu ermitteln und bereitzustellen. Das Coriolis-Messgerät kann auch einen oder mehrere Temperaturfühler (nicht gezeigt) aufweisen, welche jeweils an einer Außenseite eines Messrohrs angebracht sind. So kann beispielsweise auf Messrohreigenschaften geschlossen werden, welche das Schwingungsverhalten des Messrohrs bedingen.

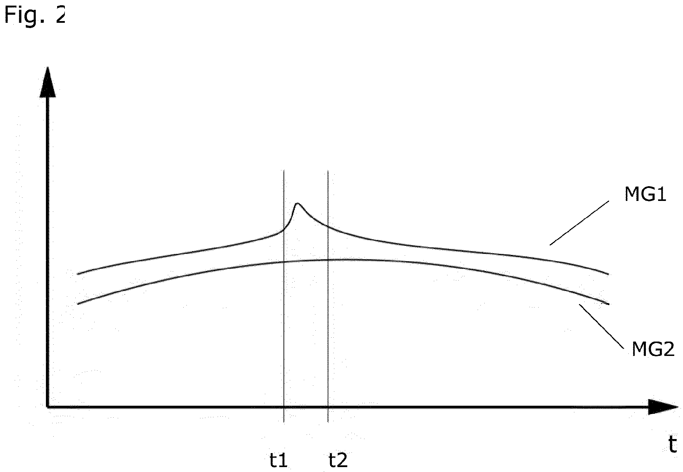

Fig. 2 skizziert Messwertverläufe von Messgrößen MG1 und MG2, anhand derer in den folgenden Beispielen das erfindungsgemäße Verfahren erläutert wird. Die Messgrößen MG1 und MG2 können zwei verschiedene Messgrößen sein, welche mittels des mindestens einen Messrohrs der ersten Gruppe oder mittels des mindestens einen Messrohrs der zweiten Gruppe erfasst werden. Die Messgrößen MG1 und MG2 können auch gleiche Messgrößen sein, welche mittels des mindestens einen Messrohrs der ersten Gruppe und mittels des mindestens einen Messrohrs der zweiten Gruppe erfasst werden. Die Messwertverläufe sind zu Darstellungszwecken vertikal verschoben, sie können unterschiedlich sein oder im Wesentlichen gleich sein.

Für die Erläuterung des Verfahrens im Falle dass die Messgrößen MG1 und MG2 gleich sind und von verschiedenen Messrohren bzw. Gruppen, also dem mindestens einen Messrohr der ersten Gruppe und dem mindesten einen Messrohr der zweiten Gruppe überwacht werden, und erwartungsgemäß sehr ähnliche Messwerte bzw. sehr ähnliche Messwertverläufe aufweisen sollen, soll davon ausgegangen werden, dass die Messwertverläufe außerhalb des Zeitbereichs t1 bis t2 im Wesentlichen gleich sind. Messgröße MG1 weist einen Messwertverlauf auf wie Messgröße MG2, wobei im Zeitbereich t1 bis t2 die Messgröße MG1 eine Schwankung des Messwertverlaufs aufweist.

Für ein Überprüfen der Einhaltung von Glaubwürdigkeitsanforderungen durch die Messwertverläufe kann überprüft werden, ob Messwerte der mindestens einen Messgröße, in diesem Fall MG1, in einem Soll-Messwertbereich liegen, und/oder ob eine erste und/oder zweite zeitliche Ableitung eines Messwertverlaufs der mindestens einen Messgröße jeweils innerhalb eines Sollbereichs liegt. Falls MG1 die Glaubwürdigkeitsanforderung nicht erfüllt, dann kann der Messwertverlauf der Messgröße MG1 im Zeitbereich t1 bis t2 mittels des Messwertverlaufs der entsprechenden Messgröße des jeweils mindestens einen anderen Messrohrs ermittelt werden. Ein Fachmann wird einen Sollbereich bzw. Soll-Messwertbereich gemäß seinen Bedürfnissen und Einschätzungen wählen.

Für den Fall, dass die Messgröße MG1 eine Glaubwürdigkeitsanforderung verletzt, können Messwerte der Messgröße MG2 herangezogen werden, um den Messwertverlauf der Messgröße MG1 bezüglich eines Verletzungszeitraums, hier von t1 bis t2 zu ermitteln. Dies kann beispielsweise bei Messgrößen wie Dichte oder Viskosität ein Ersetzen bedeuten. Das Ermitteln kann aber auch Unterschiede zwischen dem mindestens einen Messrohr der ersten Gruppe und dem mindestens einen Messrohr der zweiten Gruppe berücksichtigen. So kann beispielsweise ein Durchfluss aufgrund unterschiedlicher Strömungswiderstände zwischen dem mindestens einen Messrohr der ersten Gruppe 11.1 und dem mindestens einen Messrohr der zweiten Gruppe 11.2 bei gleichem Mediendruck unterschiedlich sein, so dass diese Unterschiedlichkeit beispielsweise mittels eines Faktors F mit einbezogen werden kann. Der Fachmann wird eine entsprechende Vorgehensweise wählen.

Entsprechendes gilt für den Fall, dass beide Messgrößen MG1 und MG2 Messgrößen erfasst mittels entweder des mindestens einen Messrohrs der ersten Gruppe oder des mindestens einen Messrohrs der zweiten Gruppe sind. Beispielsweise kann MG1 eine Phasendifferenz zwischen Messsignalen von mindestens zwei Schwingungssensoren des mindestens einen ersten/zweiten Messrohrs sein und somit einem Massedurchfluss entsprechen, und MG2 eine Resonanzfrequenz des mindestens einen Messrohrs der ersten/zweiten Gruppe und somit einer Mediendichte entsprechen. Falls die Messwertverläufe der beiden Messgrößen nicht miteinander korrespondieren, kann das ein Hinweis auf mangelnde Glaubwürdigkeit sein. In diesem Fall werden Messwerte der Messgrößen MG1 und MG2 mittels entsprechender Messwerte erfasst mittels der zweiten/ersten Gruppe ermittelt. Es kann vorteilhaft sein, die Messgrößen MG1 und MG2 bei dem jeweils anderen mindestens einen Messrohr zu überprüfen. So kann beispielsweise bei ein Anschalten einer Pumpe bei dem mindestens einen ersten Messrohr und dem mindestens einen zweiten Messrohr eine Mediendichte konstant bleiben, der Massedurchfluss jedoch stark variieren, so dass bei Betrachtung nur des mindesten einen ersten Messrohrs oder des mindestens einen zweiten Messrohrs eine Situation mangelnder Glaubwürdigkeit vorliegt. Falls jedoch wie in diesem Beispiel bei dem mindestens einen Messrohr der ersten Gruppe und dem mindestens einen Messrohr der zweiten Gruppe die Mediendichte gleichbleibt und der Massedurchfluss stark variiert, kann dies als ein Vorliegen glaubwürdiger Messwerte gewertet werden.

Resonanzfrequenzänderungen bei im Wesentlichen konstant bleibendem Massedurchfluss können beispielsweise durch Vorliegen von Gasblasen in einem flüssigen Medium verursacht werden. Gasblasen verringern auch eine lokale Dichte des flüssigen Mediums und beeinflussen somit eine Schwingungssensoramplitude. Eine Schwingungssensoramplitudenschwankung kann also ein Hinweis auf Gasblasen sein und auf mangelnde Glaubwürdigkeit hinweisen. Falls die Schwingungserreger so angesteuert werden, dass eine Coriolis-Schwingungsmode eine gleichbleibende Amplitude aufweist, können Gasblasen Auswirkungen auf eine einzustellende Schwingungserregerstromamplitude haben. Auch das kann ein Hinweis auf Gasblasen sein und auf mangelnde Glaubwürdigkeit hinweisen. Eine Änderung, insbesondere ein Anstieg einer Schwingungsdämpfung kann auch ein Hinweis auf ein Vorliegen von Gasblasen und somit mangelnder Glaubwürdigkeit sein.

Für den Fall, dass Messwerte von Messgrößen des mindestens einen ersten Messrohrs und des mindestens einen zweiten Messrohrs unglaubwürdig sind, kann auf Historiendaten zurückgegriffen werden. So können beispielsweise Historiendaten des mindestens einen ersten Messrohrs und des mindestens einen zweiten Messrohrs vorgehalten werden. Für den Fall, dass bei dem mindestens einen Messrohr der ersten Gruppe bzw. dem mindestens einen Messrohr der zweiten Gruppe Historiendaten nur noch eingeschränkt verwendbar sind, beispielsweise weil Messwerte des mindestens einen Messrohrs der ersten Gruppe bzw. mindestens einen Messrohrs der zweiten Gruppe zu lange unglaubwürdig sind, dann können Historiendaten des mindestens einen Messrohrs der zweiten Gruppe bzw. des mindestens einen Messrohrs der ersten Gruppe für das mindestens eine Messrohr der ersten Gruppe bzw. mindestens eine Messrohr der zweiten Gruppe genutzt werden.

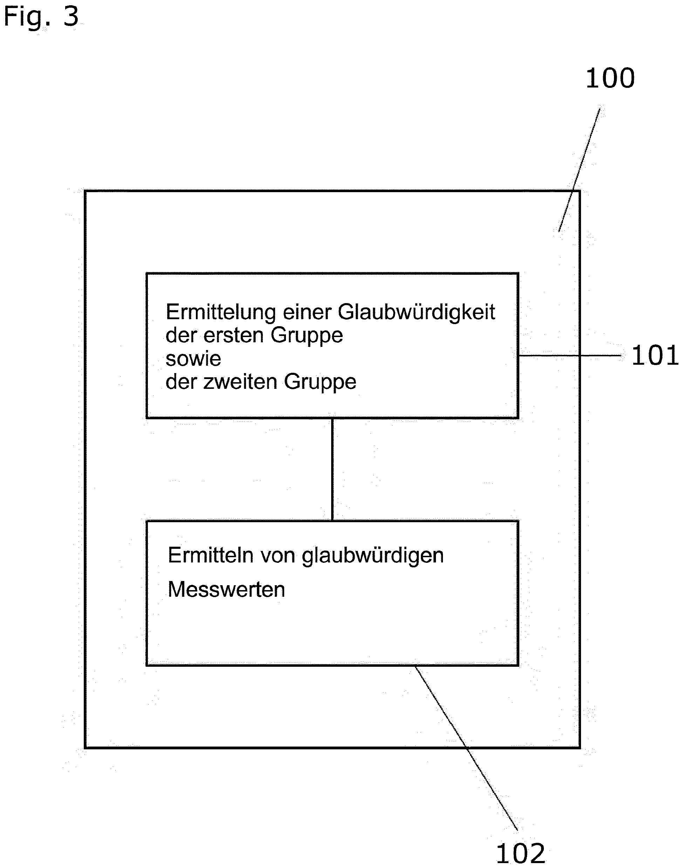

Fig. 3 skizziert schematisch einen Ablauf eines erfindungsgemäßen Verfahrens 100.

In einem ersten Verfahrensschritt 101 wird kontinuierlich oder in zeitlichen Abständen eine Glaubwürdigkeit der Messwerte von Messgrößen des mindestens einen Messrohrs der ersten Gruppe und des mindestens einen Messrohrs der zweiten bestimmt. Bei Feststellung, dass Messwerte einer Messgröße unglaubwürdig sind, wie in Fig. 2 mit MG1 beispielhaft gezeigt, dann werden in einem zweiten Verfahrensschritt glaubwürdige Messwerte ermittelt und für das Bereitstellen von Messwerten verwendet.

### Bezugszeichenliste

- 10: Coriolis-Messgerät
- 11: Messrohr
- 11.1: erste Gruppe von Messrohren
- 11.2: zweite Gruppe von Messrohren
- 11.31: Einlauf
- 11.32: Auslauf
- 12: Schwingungserreger
- 13: Schwingungssensor
- 14: elektronische Mess-/Betriebsschaltung
- 15: Elektronikgehäuse
- 16: Temperaturfühler
- 17: Befestigungsvorrichtung
- 17.1: Platte
- 18: Trägerkörper
- 19: Sammler
- 19.1: erster Sammler
- 19.2: zweiter Sammler
- 100: Verfahren
- 101: erster Verfahrensschritt
- 102: zweiter Verfahrensschritt
- MG: Messgröße

## Patentansprüche

1. Verfahren (100) zur Korrektur mindestens eines Messwerts einer Messgröße betreffend ein durch mindestens zwei Messrohre strömendes Medium, wobei Messwerte mit einem Coriolis-Messgerät (10) erfasst werden,
wobei das Coriolis-Messgerät eine erste Gruppe (11.1) von Messrohren und eine zweite Gruppe (11.2) von Messrohren mit jeweils mindestens einem Messrohr zum Führen des Mediums sowie für jede Gruppe jeweils mindestens einen Schwingungserreger (12) sowie jeweils mindestens zwei Schwingungssensoren (13) aufweist,
wobei jedes Messrohr mittels mindestens eines Schwingungserregers zum Schwingen angeregt wird, und wobei die Schwingungen jedes Messrohrs mittels mindestens zweier Schwingungssensoren erfasst werden,
wobei die Messrohre unterschiedlicher Gruppen voneinander entkoppelt sind,
wobei eine elektronische Mess-/Betriebsschaltung (14) des Coriolis-Messgeräts jeweils mindestens eine der folgenden Messgrößen oder jeweils einer davon abgeleiteten Messgröße mittels der ersten Gruppe sowie der zweiten Gruppe überwacht:
Phasendifferenz zwischen Messsignalen von mindestens zwei Schwingungssensoren, Resonanzfrequenz,
Schwingungserregerstromamplitude,
Messrohrschwingungsamplitude,
wobei in einem ersten Verfahrensschritt (101) für das mindestens eine Messrohr der ersten Gruppe und für das mindestens eine Messrohr der zweiten Gruppe auf Basis mindestens einer der überwachten Messgrößen jeweils eine Glaubwürdigkeit ermittelt wird,
**dadurch gekennzeichnet, dass**
bei Verfehlen einer Glaubwürdigkeitsanforderung bei zumindest einer der über die erste Gruppe oder zweite Gruppe von Messrohren überwachten Messgrößen (MG), in einem zweiten Verfahrensschritt (102), Messwerte der Messgrößen der ersten Gruppe oder zweiten Gruppe in Abhängigkeit von entsprechenden Messwerten der mittels der mindestens einen zweiten bzw. ersten Gruppe erfassten Messgrößen ermittelt werden.

2. Verfahren nach Anspruch 1, wobei ein Einhalten einer Glaubwürdigkeitsanforderung ein Erfüllen zumindest eines der folgenden Kriterien bedarf:
Messwerte der mindestens einen Messgröße liegen in einem Soll-Messwertbereich;
eine erste und/oder zweite zeitliche Ableitung eines Messwertverlaufs der mindestens einen Messgröße liegt jeweils innerhalb eines Sollbereichs;

3. Verfahren nach Anspruch 1 oder 2,
wobei bei Nichteinhalten der Glaubwürdigkeitsanforderung durch die erste Gruppe und durch die zweite Gruppe
ein erster Glaubwürdigkeitswert für die erste Gruppe sowie ein zweiter Glaubwürdigkeitswert für die zweite Gruppe ermittelt wird,
wobei Messwerte der Messgrößen erfasst mittels einer weniger glaubwürdigen Gruppe mittels der entsprechenden Messwerte der Messgrößen erfasst mittels der glaubwürdigeren Gruppe korrigiert werden,
wobei bei Ermitteln eines Glaubwürdigkeitswerts zumindest eines der folgenden Kriterien berücksichtigt wird:
Abweichung von Messwerten vom Soll-Messwertbereich;
Abweichung der ersten und/oder zweiten zeitlichen Ableitung eines Messwertverlaufs der mindestens einen Messgröße vom Sollbereich.

4. Verfahren nach einem der vorigen Ansprüche,
wobei bei Nichteinhalten der Glaubwürdigkeitsanforderung durch die erste Gruppe und durch die zweite Gruppe aktuelle Messwerte durch historische Messwerte vor Nichteinhaltung der Glaubwürdigkeitsanforderung ersetzt werden.

5. Verfahren nach einem der Ansprüche 2 bis 4,
wobei der Soll-Messwertbereich und/oder der Sollbereich vorgeben, insbesondere messstellenspezifisch vorgegeben ist,
oder wobei der Soll-Messwertbereich und/oder der Sollbereich auf Basis entsprechender vorhergehender Messwerte und/oder Messwertverlauf festgelegt wird.

6. Verfahren nach Anspruch 5,
wobei ein vorhergehender Zeitbereich von mindestens 5 Minuten, und insbesondere mindestens 15 Minuten und bevorzugt mindestens 30 Minuten berücksichtigt wird, und/oder wobei ein vorhergehender Zeitbereich von höchstens 240 Minuten, und insbesondere höchstens 180 Minuten und bevorzugt höchstens 120 Minuten berücksichtigt wird.

7. Verfahren nach einem der vorigen Ansprüche,
wobei eine abgeleitete Messgröße eine Messgröße aus folgender Liste ist:
Schwingungsdämpfung, Massedurchfluss, Dichte, Viskosität, Reynoldszahl.

8. Verfahren nach einem der vorigen Ansprüche,
wobei das mindestens eine Messrohr der ersten Gruppe relativ zum mindestens einen Messrohr der zweiten Gruppe unterschiedliche Schwingungseigenschaften aufweist,
wobei das mindestens eine Messrohr der ersten Gruppe sowie das mindestens eine Messrohr der zweiten Gruppe mit unterschiedlichen Schwingungsfrequenzen angeregt werden.

9. Verfahren nach einem der vorigen Ansprüche,
wobei bei der Messwertkorrektur betreffend das mindestens eine Messrohr der ersten Gruppe/ Messrohr der zweiten Gruppe ein Korrekturfaktor angewandt wird, wobei der Korrekturfaktor mindestens eine der folgenden Eigenschaften des mindestens einen Messrohrs der ersten Gruppe sowie des mindestens einen Messrohrs der zweiten Gruppe berücksichtigt:
Strömungswiderstand, Temperatur, Länge, Durchmesser.

10. Verfahren nach einem der vorigen Ansprüche,
wobei zwei Messrohre der ersten Gruppe sowie zwei Messrohre der zweiten Gruppe jeweils mittels mindestens eines Schwingungserregers paarweise in gegenläufige Schwingungen versetzt werden,
und wobei die Messrohrschwingungen der zwei Messrohre der ersten Gruppe sowie der zwei Messrohre der zweiten Gruppe jeweils mittels mindestens zweier Schwingungssensoren paarweise ausgelesen werden.

11. Coriolis-Messgerät (10), eingerichtet zur Umsetzung des Verfahrens (100) gemäß einem der Ansprüche 1 bis 10 umfassend:
eine erste Gruppe von Messrohren (11.1) mit mindestens einem Messrohr und eine zweite Gruppe (11.2) von Messrohren mit mindestens einem Messrohr (11.2) zum Führen eines Mediums, wobei jedes Messrohr (11) einen Einlauf (11.31) und einen Auslauf (11.32) aufweist;
mindestens einen Schwingungserreger (12), welcher dazu eingerichtet ist, die Messrohre zu Schwingungen anzuregen;
mindestens zwei Schwingungssensoren (13), welche dazu eingerichtet sind, die Schwingungen des Messrohrs zu erfassen;
eine elektronische Mess-/Betriebsschaltung (14), welche dazu eingerichtet ist, den Schwingungserreger sowie die Schwingungssensoren zu betreiben und Massedurchfluss- bzw. Durchflussgeschwindigkeits- bzw. Dichtemesswerte zu bestimmen und auszugeben sowie das Verfahren auszuführen;
einen Trägerkörper (18), welcher dazu eingerichtet ist, die Messrohre zu tragen,
wobei das Coriolis-Messgerät insbesondere ein Elektronikgehäuse (15) zum Behausen der elektronischen Mess-/Betriebsschaltung aufweist.

12. Coriolis-Messgerät nach Anspruch 11,
wobei an mindestens einem Messrohr der ersten Gruppe (11.1) sowie an mindestens einem Messrohr der zweiten Gruppe (11.2) jeweils mindestens ein Temperaturfühler (16) angeordnet ist, welcher dazu eingerichtet ist, eine Temperatur des entsprechenden Messrohrs zu erfassen,
wobei die elektronische Mess-Betriebsschaltung dazu eingerichtet ist, den Temperaturfühler zu betreiben.

13. Coriolis-Messgerät nach Anspruch 11 oder 12,
wobei das Messgerät am Einlauf sowie am Auslauf des mindestens einen Messrohrs einer Gruppe jeweils eine Befestigungsvorrichtung (17) aufweist, welche dazu eingerichtet ist, die Position jeweils eines äußeren Schwingungsknotens zu definieren,
wobei die Befestigungsvorrichtung beispielsweise mindestens eine Platte (17.1) aufweist, welche Platte mindestens ein Messrohr zumindest teilweise umfasst.

14. Coriolis-Messgerät nach einem der Ansprüche 11 bis 13,
wobei das Coriolis-Messgerät zwei Sammler (19) aufweist,
wobei ein erster Sammler (19.1) dazu eingerichtet ist, für die Einläufe ein Sammelvolumen bereitzustellen,
wobei ein zweiter Sammler (19.2) dazu eingerichtet ist, für die Ausläufe ein Sammelvolumen bereitzustellen.

## Claims

1. Procedure (100) designed to correct at least one measured value of a measured variable concerning a medium flowing through at least two measuring tubes, wherein the measured values are captured with a Coriolis measuring device (10), wherein the Coriolis measuring device has a first group (11.1) of measuring tubes and a second group (11.2) of measuring tubes each with at least one measuring tube to conduct the medium and, for each group, at least one vibration exciter (12) and at least two vibration sensors (13),
wherein each measuring tube is excited to vibrate by means of at least a vibration exciter, and wherein the vibrations of each measuring tube are measured by means of at least two vibration sensors,
wherein the measuring tubes of different groups are decoupled from one another, wherein an electronic measuring/operating circuit (14) of the Coriolis measuring device monitors, in each case, at least one of the following measured variables or, in each case, a measured variable which is derived therefrom by means of the first group and the second group:
Phase difference between measuring signals of at least two vibration sensors,
Resonance frequency,
Vibration exciter current amplitude,
Measuring tube vibration amplitude,
wherein in a first procedural step (101), a credibility is determined for the at least one measuring tube of the first group and for the at least one measuring tube of the second group on the basis of at least one of the monitored measured variables,
**characterized in that,**
if a credibility requirement is not met by at least one of the measured variables (MG) monitored by means of the first group or second group of measuring tubes, measured values of the measured variables of the first group or of the second group are determined in a second procedural step (102) depending on corresponding measured values of the measured variables captured by means of the at least one second group or first group.

2. Procedure as claimed in Claim 1,
wherein compliance with a credibility requirement requires that at least one of the following criteria is met:
measured values of the at least one measured variable are in a target measured value range;
a first and/or a second time derivative of a measured value progression of the at least one measured variable is within a target range.

3. Procedure as claimed in Claim 1 or 2,
wherein, in the event of non-compliance with the credibility requirement by the first group and second group, a first credibility value is determined for the first group and a second credibility value is determined for the second group, wherein measured values of the measured variables captured by means of a less credible group are corrected by means of the corresponding measured values of the measured variables captured by means of the more credible group, wherein at least one of the following criteria is taken into account when determining a credibility value:
Deviation of measured values from the target measured value range;
Deviation of the first and/or second time derivative of a measured value progression of the at least one measured variable from the target range.

4. Procedure as claimed in one of the previous claims,
wherein, in the event of non-compliance with the credibility requirement by the first group and by the second group, current measured values are replaced by historical measured values before non-compliance with the credibility requirement.

5. Procedure as claimed in one of the Claims 2 to 4,
wherein the target measured value range and/or the target range is predefined, particularly predefined specific to the measuring point, or wherein the target measured value range and/or the target range is set on the basis of corresponding preceding measured values and/or the progression of measured values.

6. Procedure as claimed in Claim 5,
wherein a preceding time range of at least 5 minutes, and particularly of at least 15 minutes and preferably of at least 30 minutes is taken into account, and/or wherein a preceding time range of maximum 240 minutes, and particularly of maximum 180 minutes and preferably of maximum 120 minutes is taken into account.

7. Procedure as claimed in one of the previous claims,
wherein a derived measured variable is a measured variable from the following list:
Vibration damping, mass flow, density, viscosity, Reynolds number.

8. Procedure as claimed in one of the previous claims,
wherein the at least one measuring tube of the first group has different vibration characteristics in relation to the at least one measuring tube of the second group,
wherein the at least one measuring tube of the first group and the at least one measuring tube of the second group are excited at different vibration frequencies.

9. Procedure as claimed in one of the previous claims,
wherein a correction factor is applied during the measured value correction concerning the at least one measuring tube of the first group / measuring tube of the second group, wherein the correction factor takes into account at least one of the following properties of the at least one measuring tube of the first group and of the at least one measuring tube of the second group:
Flow resistance, temperature, length, diameter.

10. Procedure as claimed in one of the previous claims,
wherein two measuring tubes of the first group and two measuring tubes of the second group are set to vibrate in the opposite direction, in pairs, by means of at least one vibration exciter,
and wherein the measuring tube vibrations of the two measuring tubes of the first group and of the two measuring tubes of the second group are read out, in pairs, using at least two vibration sensors.

11. Coriolis measuring device (10) designed to implement the procedure (100) as claimed in one of the Claims 1 to 10, said flowmeter comprising:
a first group (11.1) of measuring tubes with at least one measuring tube and a second group (11.2) of measuring tubes with at least one measuring tube (11.2) to conduct a medium, each measuring tube (11) having an inlet (11.31) and an outlet (11.32);
at least one vibration exciter (12), which is designed to make the measuring tubes vibrate;
at least two vibration sensors (13), which are designed to measure the vibrations of the measuring tube;
an electronic measuring/operating circuit (14), wherein said circuit is designed to operate the vibration exciter and the vibration sensors, and to determine and output measured values for mass flow or flow velocity or density, and to execute the procedure;
a support body (18) which is designed to support the measuring tubes,
wherein the Coriolis measuring device particularly comprises an electronic housing (15) designed to accommodate the electronic measuring/operating circuit.

12. Coriolis measuring device as claimed in Claim 11,
wherein at least one temperature sensor (16) is arranged on at least one measuring tube of the first group (11.1) and on at least one measuring tube of the second group (11.2), wherein said sensor is designed to measure a temperature of the corresponding measuring tube,
wherein the electronic measuring/operating circuit is designed to operate the temperature sensor.

13. Coriolis measuring device as claimed in Claim 11 or 12,
wherein the measuring device has a fastening unit (17) at both the inlet and the outlet of the at least one measuring tube of a group, wherein said fastening unit is designed to define the respective position of an outer vibration node,
wherein the fastening unit comprises, for example, at least a plate (17.1), wherein said plate at least partially encompasses at least one measuring tube.

14. Coriolis measuring device as claimed in one of the Claims 11 to 13,
wherein the Coriolis measuring device comprises two collectors (19), wherein a first collector (19.1) is designed to provide a collection volume for the inlets,
wherein a second collector (19.2) is designed to provide a collection volume for the outlets.

## Revendications

1. Procédé (100) destiné à la correction d'au moins une valeur mesurée d'une grandeur de mesure concernant un produit s'écoulant à travers au moins deux tubes de mesure, des valeurs mesurées étant saisies à l'aide d'un débitmètre Coriolis (10),
le débitmètre Coriolis comprenant un premier groupe (11.1) de tubes de mesure et un deuxième groupe (11. 2) de tubes de mesure avec respectivement au moins un tube de mesure pour guider le produit ainsi que, pour chaque groupe, respectivement au moins un excitateur de vibrations (12) ainsi que respectivement au moins deux capteurs de vibrations (13),
chaque tube de mesure étant excité en vibrations au moyen d'au moins un excitateur de vibrations, et les vibrations de chaque tube de mesure étant mesurées au moyen d'au moins deux capteurs de vibrations,
les tubes de mesure de différents groupes étant découplés les uns des autres, un circuit électronique de mesure / d'exploitation (14) du débitmètre Coriolis surveillant respectivement au moins l'une des grandeurs de mesure suivantes ou respectivement une grandeur de mesure qui en est dérivée au moyen du premier groupe ainsi que du deuxième groupe :
Différence de phase entre les signaux de mesure d'au moins deux capteurs de vibrations,
Fréquence de résonance,
Amplitude du courant de l'excitateur de vibrations,
Amplitude des vibrations du tube de mesure,
procédé pour lequel, dans une première étape de procédé (101), une crédibilité est déterminée pour l'au moins un tube de mesure du premier groupe et pour l'au moins un tube de mesure du deuxième groupe sur la base d'au moins l'une des grandeurs de mesure surveillées,
**caractérisé en ce que,**
si une exigence de crédibilité n'est pas remplie pour au moins l'une des grandeurs de mesure (MG) surveillées par l'intermédiaire du premier groupe ou du deuxième groupe de tubes de mesure, des valeurs mesurées des grandeurs de mesure du premier groupe ou du deuxième groupe sont déterminées dans une deuxième étape de procédé (102) en fonction de valeurs mesurées correspondantes des grandeurs de mesure saisies au moyen de l'au moins un deuxième ou premier groupe.

2. Procédé selon la revendication 1,
pour lequel le respect d'une exigence de crédibilité nécessite la satisfaction d'au moins un des critères suivants :
les valeurs mesurées de l'au moins une grandeur de mesure se situent dans une plage de valeurs mesurées de consigne ;
une première et/ou une deuxième dérivée temporelle d'une évolution de valeurs mesurées de l'au moins une grandeur de mesure se situent respectivement dans une plage de consigne.

3. Procédé selon la revendication 1 ou 2,
pour lequel, en cas de non-respect de l'exigence de crédibilité par le premier groupe et par le deuxième groupe, une première valeur de crédibilité est déterminée pour le premier groupe ainsi qu'une deuxième valeur de crédibilité pour le deuxième groupe,
des valeurs mesurées des grandeurs de mesure saisies au moyen d'un groupe moins crédible étant corrigées au moyen des valeurs mesurées correspondantes des grandeurs de mesure saisies au moyen du groupe plus crédible,
au moins un des critères suivants étant pris en compte lors de la détermination d'une valeur de crédibilité :
Écart des valeurs mesurées par rapport à la plage de valeurs mesurées de consigne ;
Écart de la première et/ou de la deuxième dérivée dans le temps d'une évolution de valeurs mesurées d'au moins une grandeur de mesure par rapport à la plage de consigne.

4. Procédé selon l'une des revendications précédentes,
pour lequel, en cas de non-respect de l'exigence de crédibilité par le premier groupe et par le deuxième groupe, des valeurs mesurées actuelles sont remplacées par des valeurs mesurées historiques avant le non-respect de l'exigence de crédibilité.

5. Procédé selon l'une des revendications 2 à 4,
pour lequel la plage de valeurs mesurées de consigne et/ou la plage de consigne est prédéfinie, notamment prédéfinie de manière spécifique au point de mesure, ou pour lequel la plage de valeurs mesurées de consigne et/ou la plage de consigne est fixée sur la base de valeurs mesurées précédentes correspondantes et/ou de l'évolution des valeurs mesurées.

6. Procédé selon la revendication 5,
pour lequel on prend en compte une plage de temps précédente d'au moins 5 minutes, et notamment d'au moins 15 minutes et de préférence d'au moins 30 minutes, et/ou pour lequel on prend en compte une plage de temps précédente d'au plus 240 minutes, et notamment d'au plus 180 minutes et de préférence d'au plus 120 minutes.

7. Procédé selon l'une des revendications précédentes,
pour lequel une grandeur de mesure dérivée est une grandeur de mesure de la liste suivante :
Amortissement des vibrations, débit massique, densité, viscosité, nombre de Reynolds.

8. Procédé selon l'une des revendications précédentes,
pour lequel l'au moins un tube de mesure du premier groupe présente des caractéristiques de vibration différentes par rapport à l'au moins un tube de mesure du deuxième groupe,
pour lequel l'au moins un tube de mesure du premier groupe ainsi que l'au moins un tube de mesure du deuxième groupe sont excités à des fréquences de vibration différentes.

9. Procédé selon l'une des revendications précédentes,
pour lequel un facteur de correction est appliqué lors de la correction de la valeur mesurée concernant l'au moins un tube de mesure du premier groupe / tube de mesure du deuxième groupe, le facteur de correction tenant compte d'au moins une des propriétés suivantes de l'au moins un tube de mesure du premier groupe ainsi que de l'au moins un tube de mesure du deuxième groupe :
Résistance à l'écoulement, température, longueur, diamètre.

10. Procédé selon l'une des revendications précédentes,
pour lequel deux tubes de mesure du premier groupe ainsi que deux tubes de mesure du deuxième groupe sont mis en vibration en sens inverse, par paires, au moyen d'au moins un excitateur de vibrations,
et pour lequel les vibrations des deux tubes de mesure du premier groupe ainsi que des deux tubes de mesure du deuxième groupe sont respectivement mesurées par paires au moyen d'au moins deux capteurs de vibrations.

11. Débitmètre Coriolis conçu pour mettre en œuvre le procédé (100) selon l'une des revendications 1 à 10, lequel débitmètre comprend :
un premier groupe (11.1) de tubes de mesure comprenant au moins un tube de mesure et un deuxième groupe (11.2) de tubes de mesure comprenant au moins un tube de mesure (11.2) destiné à guider un produit, chaque tube de mesure (11) présentant une entrée (11.31) et une sortie (11.32) ;
au moins un excitateur de vibrations (12), lequel est conçu pour faire vibrer les tubes de mesure ;
au moins deux capteurs de vibrations (13), lesquels sont conçus pour mesurer les vibrations du tube de mesure ;
un circuit électronique de mesure / d'exploitation (14), lequel circuit est conçu pour exploiter l'excitateur de vibrations ainsi que les capteurs de vibrations, et pour déterminer et émettre des valeurs mesurées de débit massique ou de vitesse d'écoulement ou de densité, ainsi que pour exécuter le procédé ;
un corps de support (18) conçu pour supporter les tubes de mesure,
le débitmètre Coriolis comprenant notamment un boîtier électronique (15) destiné à loger le circuit électronique de mesure / d'exploitation.

12. Débitmètre Coriolis selon la revendication 11,
pour lequel au moins une sonde de température (16) est disposée sur au moins un tube de mesure du premier groupe (11.1) ainsi que sur au moins un tube de mesure du deuxième groupe (11.2), laquelle sonde est conçue pour mesurer une température du tube de mesure correspondant,
pour lequel le circuit électronique de mesure / d'exploitation est conçu pour exploiter la sonde de température.

13. Débitmètre Coriolis selon la revendication 11 ou 12,
pour lequel le débitmètre présente à l'entrée ainsi qu'à la sortie de l'au moins un tube de mesure d'un groupe respectivement un dispositif de fixation (17), lequel dispositif est conçu pour définir la position respectivement d'un nœud de vibration extérieur,
pour lequel le dispositif de fixation comprend par exemple au moins une plaque (17.1), laquelle plaque entoure au moins partiellement au moins un tube de mesure.

14. Débitmètre Coriolis selon l'une des revendications 11 à 13,
pour lequel le débitmètre Coriolis comprend deux collecteurs (19),
un premier collecteur (19.1) étant conçu pour fournir un volume de collecte pour les entrées,
un deuxième collecteur (19.2) étant conçu pour fournir un volume de collecte pour les sorties.
